# EUROPÄISCHE PATENTANMELDUNG

(11) **EP 1 638 176 A2**
(43) Veröffentlichungstag der Anmeldung: **22.03.2006**
(21) Anmeldenummer: 05107879.8
(22) Anmeldetag: 29.08.2005
(51) Int. Cl.: H01R 31/00, H02K 5/22

(54) **Elektronikhalter für eine elektrische Maschine**

(30) Priorität: 21.09.2004 DE 102004045627
(71) Anmelder: ROBERT BOSCH GMBH, 70442 Stuttgart (DE)
(72) Erfinder: Drewe, Ingo, 77815, Buehl (DE); Meyer, Christian, 76228, Karlsruhe-Wolfartsweier (DE)

(57) **Zusammenfassung**

Die vorliegende Erfindung betrifft einen Elektronikhalter für eine elektrische Maschine, umfassend ein elektrisch leitendes Kontaktelement (2), um eine Kontaktierung zwischen einem Bauteil der elektrischen Maschine und einem Steckerelement (5) herzustellen, wobei das Kontaktelement (2) eine erste Kontaktebene (2a; 9a) und eine zweite Kontaktebene (2b; 9b) aufweist und die erste Kontaktebene (2a; 9a) mit der zweiten Kontaktebene (2b; 9b) gleitend verbunden ist.

## Beschreibung

### Stand der Technik

Die vorliegende Erfindung betrifft einen Elektronikhalter für eine elektrische Maschine, insbesondere für einen Elektromotor.

Bei elektrischen Maschinen, insbesondere bei Elektromotoren, werden in jüngster Zeit verstärkt Sensoren o.ä. verwendet, um verschiedene Parameter wie z.B. Drehzahlen, Drehrichtung, Temperatur der elektrischen Maschine usw. zu erfassen. Ferner sind bei Bürstenmotoren elektrische Anschlüsse für die Spannungsversorgung der Bürsten notwendig. Insbesondere bei Elektromotoren, welche in Fahrzeugen verwendet werden sollen, steigen die Anforderungen der Fahrzeughersteller hinsichtlich Informationen über den Zustand des Motors, da Elektromotoren verstärkt in Fahrzeugen als Komfortantriebe bzw. Stelleinrichtungen verwendet werden. Diese Information über den Zustand des Motors ist für den Betrieb notwendig. Dieser Bedarf an zusätzlichen Informationen über den Zustand des Elektromotors bereitet jedoch Probleme dahingehend, dass eine Vielzahl von Steckanschlüssen am Elektromotor für die einzelnen Bauteile bzw. Sensoren vorgesehen werden müssen, um Kontakte für die notwendigen Informationen bzw. den Strom und/oder die Spannung verschiedener Bauteile bereitzustellen. Da der Bauraum für die elektrischen Maschinen jedoch begrenzt ist, ergeben sich häufig Platzprobleme aufgrund einer Vielzahl von notwendigen Anschlüssen bzw. Steckern. Bei einer Vielzahl von Kontakten kann es dabei schnell vorkommen, dass ein Stecker breiter wird als die elektrische Maschine selbst.

### Vorteile der Erfindung

Der erfindungsgemäße Elektronikhalter für eine elektrische Maschine mit den Merkmalen des Patentanspruchs 1 weist demgegenüber den Vorteil auf, dass er eine minimierte Anzahl von Steckern für eine Vielzahl von Bauteilen bzw. Sensoren, welche eine Verbindung für Strom bzw. Spannung (Leistungsanteil) und/oder Informationen (Signalanteil) benötigen, aufweist. Dies wird erfindungsgemäß dadurch erreicht, dass ein Elektronikhalter vorgesehen ist, welcher ein elektrisches Kontaktelement aufweist, das einen elektrischen Kontakt zwischen einem Bauteil der elektrischen Maschine und einem Steckerelement herstellt. Das elektrische Kontaktelement umfasst dabei eine erste und eine zweite Kontaktebene, wobei die erste und die zweite Kontaktebene miteinander elektrisch leitend verbunden sind. Die elektrischen Kontaktebenen stellen dabei den elektrischen Kontakt zwischen dem Stecker und dem Bauteil bereit.

Die Unteransprüche zeigen bevorzugte Weiterbildungen der Erfindung.

Besonders bevorzugt ist die erste Kontaktebene zur zweiten Kontaktebene im Wesentlichen parallel angeordnet. Dadurch kann ein besonders kompakter Aufbau realisiert werden. Der Abstand der zueinander parallel angeordneten Kontaktebenen ist dabei derart gewählt, dass zwischen den im Wesentlichen parallelen Ebenen keine elektromagnetischen Störungen o.ä. auftreten. Durch diese Maßnahme können die einzelnen Kontaktebenen weiterhin radial zu einer Welle der elektrischen Maschine angeordnet werden, da in radialer Richtung der elektrischen Maschine im Gehäuse üblicherweise ein größerer Bauraum zur Verfügung steht als in axialer Richtung der elektrischen Maschine.

Um einen einfachen Kontakt zwischen den einzelnen Kontaktebenen und dem jeweiligen Bauteil der elektrischen Maschine bereitzustellen, ist in jeder Kontaktebene vorzugsweise eine Ausnehmung ausgebildet. Besonders bevorzugt sind in der Ausnehmung in der Kontaktebene Kontakte angeordnet, welche in die Ausnehmung hinein vorstehen. Dies gewährleistet einen sicheren Kontakt mit dem Bauteil.

Eine besonders einfache und kostengünstige Herstellbarkeit kann erreicht werden, wenn das elektrische Kontaktelement einstückig gebildet ist. Dabei kann das Kontaktelement beispielsweise aus einem blechartigen Streifen hergestellt werden, welcher mehrfach umgebogen wird, so dass zwei oder mehrere im Wesentlichen parallel zueinander angeordnete Kontaktebenen entstehen. Die einzelnen Kontaktebenen sind dabei mit der jeweils benachbarten Kontaktebene am Rand der Ebene durch den umgebogenen Bereich des Kontaktelements verbunden. Hierbei ergibt sich weiterhin der Vorteil, dass an beliebigen Stellen des elektrischen Kontaktelements Verbindungen zum Stecker vorgesehen werden können.

Gemäß einer weiteren bevorzugten Ausgestaltung der vorliegenden Erfindung sind an wenigstens einer Kontaktebene des Kontaktelements streifenförmige Kontakte für eine Kontaktierung mit einem Bauteil der elektrischen Maschine vorgesehen.

Gemäß einer anderen bevorzugten Ausgestaltung der vorliegenden Erfindung umfasst das elektrische Kontaktelement eine erste Kontaktebene und eine zweite Kontaktebene und wenigstens einen Verbindungssteg, um eine Verbindung zwischen der ersten und der zweiten elektrischen Kontaktebene bereitzustellen. Somit besteht das Kontaktelement aus zwei einzelnen Kontaktebenen, welche über den Verbindungssteg miteinander verbunden sind. Der Verbindungssteg ist vorzugsweise einstückig mit den Kontaktebenen ausgebildet.

Besonders bevorzugt ist der erfindungsgemäße Elektronikhalter in einem Bürstenhalter eines Elektromotors integriert. Dadurch kann zum einen die Spannungsversorgung der Bürsten über den Elektronikhalter realisiert werden und andererseits ein besonders kompakter Aufbau erhalten werden, da der Elektronikhalter gleichzeitig auch als Bürstenhalter fungiert und somit ein zusätzliches Bauteil der elektrischen Maschine eingespart werden kann.

Erfindungsgemäß können somit elektrische Maschinen, insbesondere Elektromotoren für Fahrzeuge, bereitgestellt werden, bei denen eine Vielzahl von Bauteilen mit Strom bzw. Spannung versorgt werden können und Informationen zugeführt bzw. erhalten werden, wobei nur ein Stecker notwendig ist. Dadurch können derartige elektrische Maschinen besonders kompakt aufgebaut sein.

### Zeichnung

Nachfolgend werden unter Bezugnahme auf die begleitende Zeichnung Ausführungsbeispiele der Erfindung im Detail beschrieben. In der Zeichnung ist:
- Figur 1: eine schematische, geschnittene Ansicht eines Elektronikhalters gemäß einem ersten Ausführungsbeispiel der vorliegenden Erfindung,
- Figur 2: eine schematische, perspektivische Ansicht eines elektrischen Kontaktelements, welches in dem Elektronikhalter von Figur 1 verwendet wird, wobei das elektrische Kontaktelement in einem Zustand eines ersten Herstellungsschrittes dargestellt ist,
- Figur 3: eine schematische, perspektivische Ansicht des in Figur 2 gezeigten elektrischen Kontaktelements in einem Zustand, in welchem es im Elektronikhalter montiert ist,
- Figuren 4a und 4b: schematische, perspektivische Ansichten von Kontaktebenen für einen Elektronikhalter gemäß einem zweiten Ausführungsbeispiel der vorliegenden Erfindung,
- Figur 5: eine schematische Schnittansicht des Elektronikhalters gemäß dem zweiten Ausführungsbeispiel, und
- Figuren 6a, 6b und 6c: schematische Ansichten eines elektrischen Kontaktelements für einen Elektronikhalter gemäß einem dritten Ausführungsbeispiel der vorliegenden Erfindung.

### Beschreibung der Ausführungsbeispiele

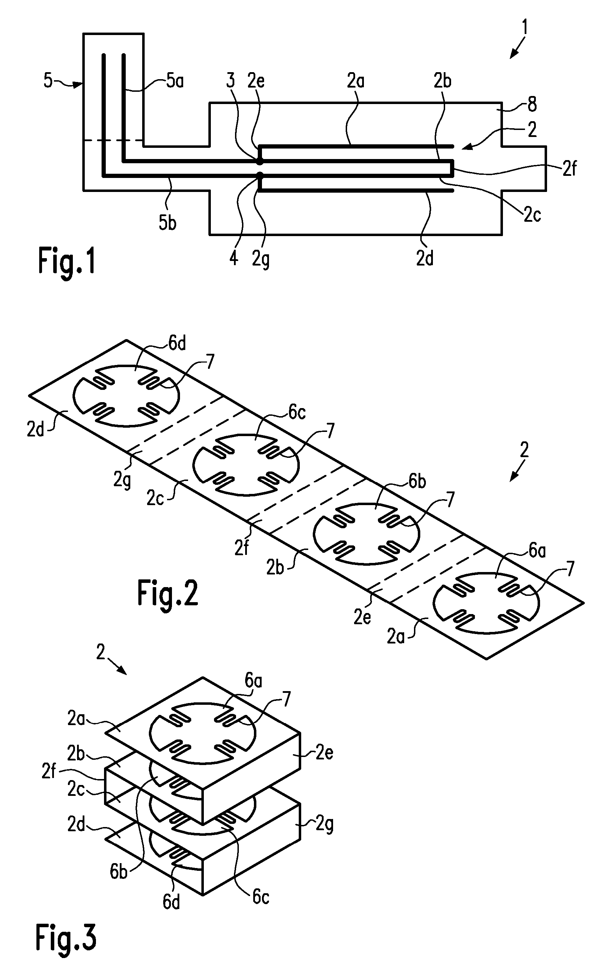

Nachfolgend wird unter Bezugnahme auf die Figuren 1 bis 3 ein Elektronikhalter 1 gemäß einem ersten Ausführungsbeispiel der vorliegenden Erfindung beschrieben.

Wie aus Figur 1 ersichtlich ist, umfasst der Elektronikhalter 1 ein elektrisches Kontaktelement 2, welches in einem Kunststoffgehäuse 8 eingespritzt ist. Ferner ist am Kunststoffgehäuse 8 ein Stecker 5 mit einem ersten Anschlusskontakt 5a und einem zweiten Anschlusskontakt 5b integral gebildet.

Wie weiter aus Figur 1 ersichtlich ist, umfasst das elektrische Kontaktelement 2 eine Vielzahl von Kontaktebenen 2a, 2b, 2c, 2d. Die Kontaktebenen 2a, 2b, 2c, 2d sind dabei jeweils parallel zueinander in einem vorbestimmten Abstand angeordnet. Zueinander benachbarte Kontaktebenen sind dabei über jeweils einen Verbindungsbereich 2e, 2f, 2g miteinander verbunden (vgl. Figur 3). Das elektrische Kontaktelement 2 ist an einem ersten Verbindungspunkt 3 mit dem ersten Anschlusskontakt 5a und an einem zweiten Verbindungspunkt 4 mit dem zweiten Anschlusskontakt 5b verbunden. Die Verbindungspunkte 3 und 4 sind dabei mit den mittleren Kontaktebenen 2b, 2c des Kontaktelements verbunden.

Das elektrische Kontaktelement 2 ist in perspektivischer Ansicht in Figur 3 dargestellt. Figur 2 zeigt ein Zwischenstadium während der Herstellung des elektrischen Kontaktelements 2. Das elektrische Kontaktelement 2 wird aus einem blechartigen, elektrisch leitenden Material hergestellt. Wie aus Figur 2 ersichtlich ist, sind in dem blechartigen Material vier Ausnehmungen 6a, 6b, 6c und 6d gebildet. Die Ausnehmungen 6a, 6b, 6c, 6d werden beispielsweise mittels Ausstanzen hergestellt. An den Ausnehmungen 6a, 6b, 6c, 6d sind jeweils vier nach innen gerichtete Kontakte 7 vorgesehen, welche einen elektrischen Kontakt mit einem Elektronikhalter der elektrischen Maschine ermöglicht. Zur besseren Übersichtlichkeit sind in den Figuren nicht alle Kontakte 7 mit einem Bezugszeichen versehen. Es sei angemerkt, dass in diesem Ausführungsbeispiel die Kontakte 7 und die Ausnehmungen 6a, 6b, 6c, 6d in jeder Kontaktebene 2a, 2b, 2c, 2d identisch ausgebildet sind. Es ist jedoch auch möglich, in jeder Kontaktebene andere Kontakte 7 bzw. unterschiedliche Anzahlen von Kontakten je nach Erfordernis für das zu kontaktierende Bauteil bzw. geometrisch anders ausgebildete Ausnehmungen vorzusehen. In Figur 2 sind weiterhin gestrichelt Biegelinien eingezeichnet, an welchen das blechartige Bauteil um jeweils ca. 90° gebogen wird. Es sei angemerkt, dass die Biegung auch für andere Winkel als 90°, z.B. 120°, ausgeführt werden kann. Nach dem Biegevorgang weist das elektrische Kontaktelement 2 den in Figur 3 dargestellten Zustand auf, wobei jeweils zueinander benachbarte Kontaktebenen über die Verbindungsbereiche 2e, 2f, 2g miteinander verbunden sind.

Grundsätzlich kann eine Kontaktierung mit den Anschlusskontakten 5a, 5b an einer beliebigen Stelle des elektrischen Kontaktelements 2 erfolgen. Hierbei können bauraumbedingte Vorgaben der elektrischen Maschine beachtet werden. Das elektrische Kontaktelement 2 und die Anschlusskontakte 5a, 5b werden vorzugsweise mit einem Kunststoffgehäuse umspritzt. Dadurch kann eine einfache und kostengünstige Herstellung ermöglicht werden.

Es sei angemerkt, dass der erfindungsgemäße Elektronikhalter neben der Informations-, Strom- und/oder Spannungsversorgung auch weitere Funktionen, insbesondere das Halten von Bürsten und/oder Sensoren eines Elektromotors, übernehmen kann. Hierbei wird ein elektrischer Kontakt über das elektrische Kontaktelement 2 in einer der Kontaktebenen vorgesehen. Ein Kontakt mit den Kontaktebenen des elektrischen Kontaktelements 2 kann dabei sowohl senkrecht zu den einzelnen Ebenen als auch in der Ebene selbst erfolgen.

Somit kann ein gemeinsamer Stecker 5 für eine Vielzahl von Kontaktmöglichkeiten über das elektrische Kontaktelement 2 vorgesehen werden, so dass der erfindungsgemäße Elektronikhalter 1 nur einen minimalen Bauraum bei einer einfachen Steckergeometrie einnimmt. Der erfindungsgemäße Elektronikhalter 1 ist dadurch besonders für elektrische Maschinen, insbesondere Elektromotoren in Fahrzeugen, verwendbar, welche klein bauende Elektromotoren benötigen.

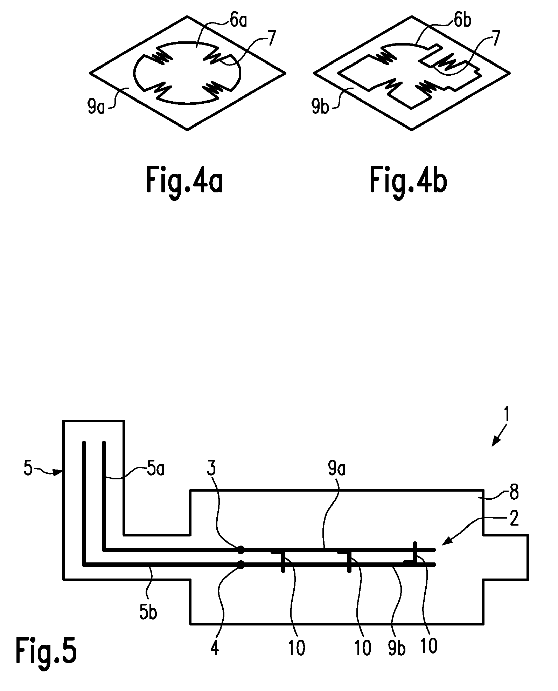

Nachfolgend wird unter Bezugnahme auf die Figuren 4a, 4b und 5 ein Elektronikhalter 1 gemäß einem zweiten Ausführungsbeispiel der vorliegenden Erfindung beschrieben. Gleiche bzw. funktional gleiche Bauteile sind mit den gleichen Bezugszeichen wie im ersten Ausführungsbeispiel bezeichnet.

Wie aus Figur 5 ersichtlich ist, weist der Elektronikhalter 1 gemäß dem zweiten Ausführungsbeispiel im Wesentlichen einen ähnlichen Aufbau wie der des ersten Ausführungsbeispiels auf. Anstelle eines einstückigen elektrischen Kontaktelements 2 sind jedoch eine erste Kontaktebene 9a und eine zweite Kontaktebene 9b vorgesehen. Die Kontaktebenen 9a, 9b weisen ebenfalls Ausnehmungen 6a bzw. 6b auf und sind im Elektronikhalter 1 miteinander über Verbindungsstege 10 verbunden. In den Ausnehmungen 6a, 6b sind wieder eine Vielzahl von nach innen gerichteten Kontakten 7 für einen Kontakt zu den jeweiligen Bauteilen der elektrischen Maschine vorgesehen.

Wie ein Vergleich der Figuren 4a und 4b zeigt, sind die Ausnehmungen 6a, 6b beim zweiten Ausführungsbeispiel unterschiedlich ausgebildet. Die Verbindungsstege 10 können an beliebigen Stellen zwischen den beiden separaten Kontaktebenen 9a, 9b angeordnet sein. Wie aus Figur 5 ersichtlich ist, sind die Kontaktebenen 9a, 9b im Elektronikhalter 1 parallel zueinander angeordnet. Über Verbindungspunkte 3, 4 ist wie im ersten Ausführungsbeispiel eine Verbindung zu einem Stecker 5 mit einem ersten Anschlusskontakt 5a und einem zweiten Anschlusskontakt 5b hergestellt.

Zur Herstellung des Elektronikhalters 1 können die Kontaktebenen 9a, 9b und die Verbindungsstege 10 im Voraus, beispielsweise mittels Schweißen oder Löten verbunden werden. Ebenfalls kann im Voraus eine Verbindung zwischen den Anschlusskontakten 5a, 5b und den Kontaktebenen 9a, 9b hergestellt werden und anschließend das Gehäuse 8 des Elektronikhalters 1 um das elektrische Kontaktelement 2 herumgespritzt werden. Ansonsten entspricht das zweite Ausführungsbeispiel dem ersten Ausführungsbeispiel, so dass auf die dort gegebene Beschreibung verwiesen werden kann.

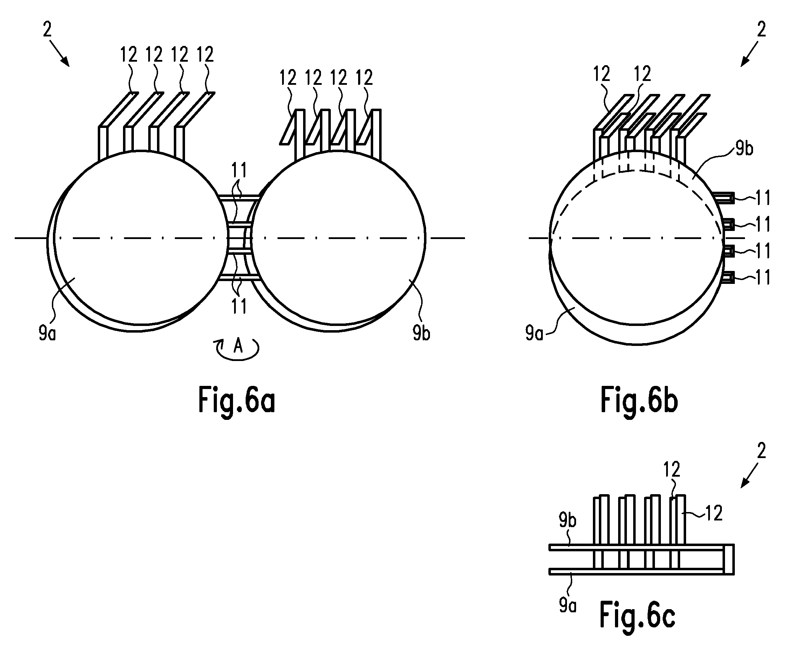

Nachfolgend wird unter Bezugnahme auf die Figuren 6a, 6b und 6c ein Elektronikhalter gemäß einem dritten Ausführungsbeispiel der vorliegenden Erfindung beschrieben. Gleiche bzw. funktional gleiche Teile sind wieder mit den gleichen Bezugszeichen wie den vorhergehenden Ausführungsbeispielen bezeichnet.

Wie aus den Figuren 6a bis 6c ersichtlich ist, ist der Elektronikhalter des dritten Ausführungsbeispiels ähnlich dem des ersten Ausführungsbeispiels jedoch mit nur zwei parallel zueinander angeordneten Kontaktebenen 9a und 9b gebildet. Die erste Kontaktebene 9a ist dabei mit der zweiten Kontaktebene 9b über vier integral gebildete Verbindungsstege 11 verbunden. Weiterhin sind an der ersten und zweiten Kontaktebene 9a, 9b integral gebildete Kontakte 12 für einen Kontakt mit einem Bauteil einer elektrischen Maschine angeordnet. Wie aus Figur 6a ersichtlich ist, sind an jeder Kontaktebene 9a, 9b jeweils vier Kontakte 12 angeordnet. Die Kontakte 12 sind im Wesentlichen streifenförmig und in einem Winkel von ca. 90° abgewinkelt. Die Kontakte 12 verlaufen ausgehend von einem äußeren Rand der Kontaktebene 9a, 9b nach außen. Wie aus Figur 6b ersichtlich ist, sind im Montagezustand des Kontaktelements 2 alle Kontakte 12 in die gleiche Richtung gerichtet.

Wie in Figur 6a angedeutet, wird das elektrische Kontaktelement 2 aus einem flachen Ausgangsmaterial hergestellt, wobei das Kontaktelement 2 beispielsweise mittels Stanzen aus einem blechartigen Material ausgestanzt werden kann. Anschließend werden die integralen Kontakte 12 in einem Winkel von ca. 90° in einem gewissen Abstand von den Kontaktebenen umgebogen. Dann, wie in Figur 6a durch den Pfeil A angedeutet, wird die zweite Kontaktebene 9b um 180° an den Verbindungsstegen 11 umgebogen. Dadurch sind die erste und zweite Kontaktebene 9a und 9b zueinander parallel, wie in Figur 6b gezeigt. Die Verbindungsstege 11 werden dabei derart umgebogen, dass zwei Biegestellen entstehen.

Das derart vorbereitete elektrische Kontaktelement 2 kann dann wieder beispielsweise mittels Schweißen mit Anschlusskontakten für einen Stecker verbunden werden und anschließend mit einem isolierten Gehäuse umspritzt werden.

Es sei angemerkt, dass die Kontakte 12 des dritten Ausführungsbeispiels nicht notwendigerweise alle an einer Seite der Kontaktebenen 9a, 9b liegen müssen. Weiterhin sei angemerkt, dass die Kontaktebenen 9a, 9b nicht kreisförmig ausgebildet sein müssen, sondern jede andere beliebige Form aufweisen können. Ferner ist es auch möglich, weitere Kontakte zu Bauteilen der elektrischen Maschine entsprechend den vorhergehenden Ausführungsbeispielen in einer in den Kontaktebenen gebildeten Ausnehmung vorzusehen.

Der erfindungsgemäße Elektronikhalter kann somit individuell an die jeweiligen Gegebenheiten angepasst werden. Es ergeben sich somit variable Anschlussmöglichkeiten für verschiedene Bauteile der elektrischen Maschine.

Weiterhin ist es grundsätzlich auch möglich, bei allen beschriebenen Ausführungsbeispielen die Anschlusskontakte 5a, 5b für den Stecker integral mit dem elektrischen Kontaktelement 2 zu bilden. Dadurch kann ein Löt- bzw. Schweißvorgang für eine Befestigung der Anschlusskontakte am elektrischen Kontaktelement 2 entfallen. Es sei jedoch angemerkt, dass insbesondere bei einem Einsatz von Elektromotoren mit dem erfindungsgemäßen Elektronikhalter in Fahrzeugen, die Fahrzeughersteller jeweils individuelle Anschlussgeometrien verlangen, sodass für jeden Fahrzeughersteller ein anderer Stecker vorgesehen werden muss. Daher ist es vorteilhaft, das elektrische Kontaktelement 2 ohne die individuellen Anschlusskontakte herzustellen.

## Patentansprüche

1. Elektronikhalter für eine elektrische Maschine, umfassend ein elektrisch leitendes Kontaktelement (2), um eine Kontaktierung zwischen einem Bauteil der elektrischen Maschine und einem Steckerelement (5) herzustellen, wobei das Kontaktelement (2) eine erste Kontaktebene (2a; 9a) und eine zweite Kontaktebene (2b; 9b) aufweist und die erste Kontaktebene (2a; 9a) mit der zweiten Kontaktebene (2b; 9b) leitend verbunden ist.

2. Elektronikhalter nach Anspruch 1, **dadurch gekennzeichnet, dass** die erste Kontaktebene (2a; 9a) zur zweiten Kontaktebene (2b; 9b) im Wesentlichen parallel angeordnet ist.

3. Elektronikhalter nach einem der vorhergehenden Ansprüche, **dadurch gekennzeichnet, dass** die Kontaktebene (2a, 2b, 2c, 2d) eine Ausnehmung (6a, 6b, 6c, 6d) aufweist.

4. Elektronikhalter nach Anspruch 3, **dadurch gekennzeichnet, dass** in der Ausnehmung (6a, 6b, 6c, 6d) der Kontaktebene vorstehende Kontakte (7) ausgebildet sind.

5. Elektronikhalter nach einem der vorhergehenden Ansprüche, **dadurch gekennzeichnet, dass** das Kontaktelement (2) ein einstückiges Bauteil ist.

6. Elektronikhalter nach einem der vorhergehenden Ansprüche, **dadurch gekennzeichnet, dass** das Kontaktelement (2) streifenförmige Kontakte (12) aufweist.

7. Elektronikhalter nach einem der vorhergehenden Ansprüche, **dadurch gekennzeichnet, dass** das Kontaktelement (2) in einem Gehäuse (8), insbesondere einem Kunststoffgehäuse, angeordnet ist.

8. Elektronikhalter nach einem der vorhergehenden Ansprüche, **gekennzeichnet durch** eine Vielzahl von Kontaktebenen (2a, 2b, 2c, 2d), welche im Wesentlichen parallel zueinander angeordnet sind.

9. Elektronikhalter nach einem der vorhergehenden Ansprüche, **gekennzeichnet durch** einen Verbindungssteg (10, 11), um eine leitende Verbindung zwischen zwei Kontaktebenen bereitzustellen.

10. Elektronikhalter nach Anspruch 9, **dadurch gekennzeichnet, dass** der Verbindungssteg (11) einstückig mit den Kontaktebenen (9a, 9b) gebildet ist.

11. Elektronikhalter nach einem der vorhergehenden Ansprüche, **dadurch gekennzeichnet, dass** der Elektronikhalter zusätzlich als Bürstenträger für Bürsten der elektrischen Maschine ausgebildet ist.

12. Elektrische Maschine mit einem Elektronikhalter nach einem der vorhergehenden Ansprüche.
